# EUROPÄISCHE PATENTSCHRIFT

(11) **EP 2 217 431 B1**
(45) Veröffentlichungstag und Bekanntmachung des Hinweises auf die Patenterteilung: **11.12.2013**
(21) Anmeldenummer: 08803999.5
(22) Anmeldetag: 11.09.2008
(51) Int. Cl.: B29C 73/16

(54) **VORRICHTUNG MIT EINER VENTILEINHEIT ZUM ABDICHTEN UND AUFPUMPEN AUFBLASBARER GEGENSTÄNDE**
DEVICE HAVING A VALVE UNIT FOR SEALING AND PUMPING UP INFLATABLE OBJECTS
DISPOSITIF DOTÉ D'UNE UNITÉ VALVE POUR ASSURER L'ÉTANCHÉITÉ ET LE GONFLAGE D'OBJETS GONFLABLES

(30) Priorität: 06.11.2007 DE 102007053241
(43) Veröffentlichungstag der Anmeldung: 18.08.2010
(73) Patentinhaber: Continental Reifen Deutschland GmbH, 30165 Hannover (DE)
(72) Erfinder: YANG, Zheng, 30171 Hannover (DE); GERLACH, Markus, 31073 Grünenplan (DE)
(74) Vertreter: Finger, Karsten
(86) Internationale Anmeldenummer: PCT/EP2008/062032
(87) Internationale Veröffentlichungsnummer: WO 2009/059825

(56) Entgegenhaltungen:
- WO-A-02/066236
- DE-A1- 10 106 468

## Beschreibung

Die Erfindung betrifft eine Vorrichtung zum Abdichten und Aufpumpen aufblasbarer Gegenstände, insbesondere zum Abdichten und Aufpumpen von Kraftfahrzeugreifen, wobei die Vorrichtung eine Druckgasquelle, einen Behälter für ein in den aufblasbaren Gegenstand einfüllbares selbsttätiges Dichtmittel, eine Ventil- und Verteilereinheit für Dichtmittel und Druckgas umfasst und die Ventil- und Verteilereinheit mit einer an die Druckgasquelle anschließbaren Einlassleitung und einer an den aufblasbaren Gegenstand anschließbaren Auslaßleitung versehen ist.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muss der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, dass die notwendigen Reparaturmaterialien, wie etwa eine entsprechende Pumpe sowie Hebe- und Schraubwerkzeuge, sowie bei nächtlichen Pannen nötige Beleuchtungskörper, in oder bei den entsprechenden Fahrzeugen nur unvollständig oder gar nicht vorhanden oder an den unterschiedlichsten Stellen verstaut sind und lange gesucht werden müssen.

Um diese Nachteile zu vermeiden, sind bereits Reparatursätze bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

Die Bedienung solcher Reparatursätze ist aber auch nicht ganz einfach, insbesondere dann, wenn je nach Betriebszustand zunächst Dichtmittelbehälter und diverse Schlauchverbindungen angeschlossen oder umgebaut werden müssen. Die meisten Reparatursätze sind nämlich auch gut dazu geeignet, ohne Dichtmitteleinsatz lediglich zum Aufblasen von Reifen, Schlauchbooten, Luftmatratzen, etc. eingesetzt zu werden. Aufgrund der heutzutage nur noch selten auftretenden Reifenpannen werden die Reparatursätze in der Regel häufiger für solche Freizeitzwecke gebraucht als für Notfälle. Wenn dies dann aber doch geschieht, befindet sich der Nutzer in ungewohnter und ungeübter Situation.

Zur Erleichterung der Handhabung der Geräte/Reparatursätze in solchen unterschiedlichen Anwendungen sind im Stand der Technik bereits Lösungen bekannt, die im Wesentlichen ein vereinfachtes Umschalten von der einen auf die andere Betriebsart beinhalten.

So offenbart die DE 101 06 468 A1 eine Vorrichtung zum Ausbringen von Reifendichtmittel aus einem Behälter, wobei dem Behälter ein Entnahmeelement mit einem Ventil zugeordnet ist, welches zum Ausbringen von Reifendichtmittel dient. Das Ventil ist dabei als Ein- oder Mehrwegeventil ausgebildet und weist einen schaltbaren Bypass auf, beispielsweise zu betätigen durch einen Drehschalter, so dass in einer Schaltstellung eine Druckgasquelle direkt mit dem Reifen oder dem aufzublasenden Gegenstand verbunden werden kann. In einer anderen Schaltstellung ist eine Verbindung zwischen Druckgasquelle (Einlass), Dichtmittelbehälter und aufzublasenden Gegenstand (Auslass) möglich. Es kann also eine Umschaltung zwischen den Betriebszuständen "nur Aufpumpen" und "Pumpen mit Dichtmittel" vorgenommen werden, ohne Schlauchverbindungen zu wechseln oder Umbauten an dem Gerät vorzunehmen. Das hier offenbarte Ventil ist zwar einfach aufgebaut, jedoch wenig robust und kann ggf. leicht verkleben. Außerdem wird zum sicheren Verschluss des Dichtmittelbehälters bei Transport und im Betriebszustand "nur Aufpumpen" ein zusätzliche Versiegelung benötigt.

WO 02/066 236 A1 offenbart eine Vorrichtung gemäß dem Oberbegriff des Anspruchs 1.

Für die Erfindung bestand also die Aufgabe, eine Vorrichtung zum Abdichten und Aufpumpen aufblasbarer Gegenstände bereitzustellen, die ein vereinfachtes Umschalten von der einen auf die andere Betriebsart erlaubt, keine zusätzlichen Dichtmaßnahmen des Behälterausgangs erfordert, die sicher zu handhaben ist, eine robuste Ausführung aufweist und dazu einfach und preisgünstig herzustellen ist.

Gelöst wird diese Aufgabe durch die Merkmale des Hauptanspruchs. Weitere vorteilhafte Ausbildungen sind in den Unteransprüchen offenbart.

Dabei weist die Ventil- und Verteilereinheit einen in einem Ventilgehäuse in seiner Längsachse verschiebbaren Ventilkolben auf, der zwischen zwei Schaltpositionen so verfahrbar ist, das in der ersten Schaltposition eine Verbindung zwischen der mit der Einlassleitung verbundene Druckgasquelle und der Auslaßleitung entsteht und dass in der zweiten Schaltposition eine Verbindung zwischen der mit der Einlassleitung verbundene Druckgasquelle und der mit dem aufblasbaren Gegenstand verbunden Auslaßleitung über den Dichtmittelbehälter entsteht.

Durch eine solche Ausführung ist die Betätigungsvorrichtung für das Umschalten zwischen den Betriebszuständen "nur Aufpumpen" und "Pumpen mit Dichtmittel" besonders robust und einfach aufgebaut. Die Benutzung ist zudem sehr sicher und hinreichend komfortabel, obwohl eine einfache und preiswerte Herstellung möglich ist.

Der Ventilkolben schließt in der ersten Schaltposition den Behälter dichtend ab und stellt einem ersten Durchlass zwischen der mit der Einlassleitung verbundene Druckgasquelle und der Auslaßleitung her und schließt in der zweiten Schaltposition den ersten Durchlass zwischen der Einlassleitung und der Auslaßleitung dichtend ab und stellt einen zweiten Durchlass zwischen der mit der Einlassleitung verbundene Druckgasquelle und dem Dichtmittelbehälter sowie zwischen Dichtmittelbehälter und der mit dem aufblasbaren Gegenstand verbunden Auslaßleitung her. Dadurch sind alle wesentlichen Schaltfunktionen an die Bewegung des Kolbens gekoppelt, wodurch nur ein Teil in besonderer Weise zur Abdichtung ausgebildet werden muss.

Eine vorteilhafte Weiterbildung besteht darin, dass der erste und/oder der zweite Durchlass mindestens teilweise durch einen im Ventilkolben angeordneten Bypass erzeugt werden. Dadurch lassen sich die Strömungsquerschnitte besonders gut anpassen. Gleiches gilt für die weiteren vorteilhaften Ausbildung, die darin bestehen, dass der erste Durchlass mindestens teilweise durch einen zwischen dem Ventilkolben und dem Ventilgehäuse angeordneten Ringspalt erzeugt wird, oder darin, dass der zweite Durchlass mindestens teilweise durch einen zwischen dem Ventilkolben und dem Ventilgehäuse angeordneten Ringspalt erzeugt wird.

Eine weitere vorteilhafte Ausbildung besteht darin, dass der Ventilkolben durch eine Drehbewegung eines am Ventilgehäuse angeordneten Drehknopfes in seiner Längsachse verschiebbar ist. Drehknöpfe sind einfach zu bedienen und können leicht mit Markierungen oder Rasten versehen werden, die sichere und eindeutige Schaltstellungen kennzeichnen.

Eine weitere vorteilhafte Ausbildung besteht darin, dass der Drehknopfes um die Längsachse des Ventilkolbens drehbar ist und letzterer über eine mit dem Drehknopf verbundene Gewindespindel im Ventilgehäuse verschiebbar ist, wobei vorteilhafterweise die Gewindespindel innerhalb des hohl ausgebildeten der Ventilkolbens angeordnet und der Ventilkolben auf seiner Innenseite mit einem komplementär zur Gewindespindel ausgebildeten Gewinde versehen ist. Solche Getriebe können selbst-hemmend ausgelegt werden und sind zudem einfach und erprobt in der Herstellung.

Eine weitere vorteilhafte Ausbildung besteht darin, dass die Gewindespindel einen zylindrischen Fortsatz aufweist, der mindestens über eine Teillänge mit dem hohlen Ventilkolben einen Ringspalt bildet. Dadurch erhält man auf einfache Weise eine weiteren Durchgangsweg/Strömungsquerschnitt, der für mindestens eine der gewünschten Schaltfunktionen nutzbar ist. Vorteilhaft ist dabei, dass der zylindrische Fortsatz mindestens an seinem Behälterseitigen Ende auf der Innenseite des hohlen Ventilkolbens durch dessen Verschiebung dichtend anlegbar ist, beispielsweise mit einfachen O-Ring-Dichtungen.

Eine weitere vorteilhafte Ausbildung besteht darin, dass der Dichtmittelbehälter mit der Ventil- und Verteilereinheit lösbar verbunden ist, wodurch ein einfacher Austausch nach dem Dichtmittelpumpen erfolgen kann. Dabei besteht eine ebenso einfache wie vorteilhafte Weiterbildung darin, dass die Ventil- und Verteilereinheit mit dem Dichtmittelbehälter verschraubt ist.

Eine weitere vorteilhafte Ausbildung besteht darin, dass der Dichtmittelbehälter in Flaschenform ausgebildet ist und die Ventil- und Verteilereinheit am Flaschenhals mit Dichtmittelbehälter verschraubt ist. Hiermit kann eine "Dichtmittelflasche" als gängiges Massenprodukt für die Vorrichtung genutzt werden.

Eine weitere vorteilhafte Weiterbildung besteht darin, dass die Ventil- und Verteilereinheit einen in den Dichtmittelbehälter hineinragenden Kragen aufweist, wobei der Kragen teilweise das Ventilgehäuse bildet. Dadurch erhält man eine sichere Verbindung und Führung der Ventil- und Verteilereinheit mit dem Dichtmittelbehälter und legt alle schaltbaren Dichtfunktionen in die Ventil- und Verteilereinheit, ohne an Flächen des Dichtmittelbehälters abdichten zu müssen.

Eine weitere vorteilhafte, weil sehr einfach und leicht herzustellende Ausbildung besteht darin, dass der Ventilkolben innerhalb des konzentrisch angeordneten Ventilgehäuses mittels O-Ringen abgedichtet ist.

Eine besonders günstige und sichere Handhabung ergibt sich dadurch, dass der Dichtmittelbehälter im Betriebszustand auf seiner unteren Grundfläche steht und die oberhalb der Grundfläche angeordnete Ventil- und Verteilereinheit ein in den Dichtmittelbehälter hineinragendes und bis unter den Dichtmittelspiegel reichendes Steigrohr aufweist. Die Ventil- und Verteilereinheit steht damit bei den üblichen Vorrichtungen solcher Art auf einer Arbeitshöhe, bei der sich nach vorliegenden Erfahrungen bis zu 145 mm an zusätzlichen Verbindungsschläuchen / Schlauchführungen einsparen lassen. Zudem ist die Handhabung bei "stehendem Dichtmittelbehälter" ungleich einfacher.

Eine weitere vorteilhafte Weiterbildung besteht darin, dass das Steigrohr an das Ventilgehäuse angeschlossen, also quasi als dessen Verlängerung ausgebildet ist. Dies begünstigt eine einfache Modul-Herstellung.

Anhand eines Ausführungsbeispieles soll die Erfindung näher erläutert werden. Es zeigen
- Fig. 1: eine prinzipielle Darstellung einer erfindungsgemäßen Vorrichtung mit der zugehörige Ventil- und Verteilereinheit in einer ersten Schaltstellung im Schnitt
- Fig. 2: eine prinzipielle Darstellung einer erfindungsgemäßen Vorrichtung mit der zugehörige Ventil- und Verteilereinheit in einer zweiten Schaltstellung im Schnitt

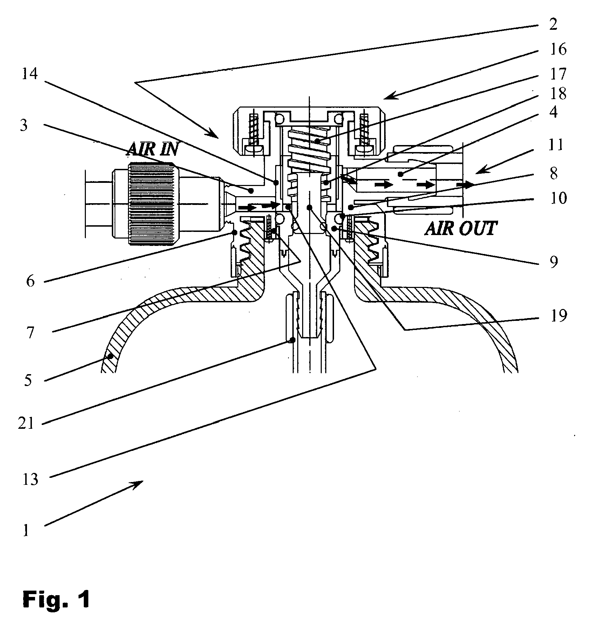

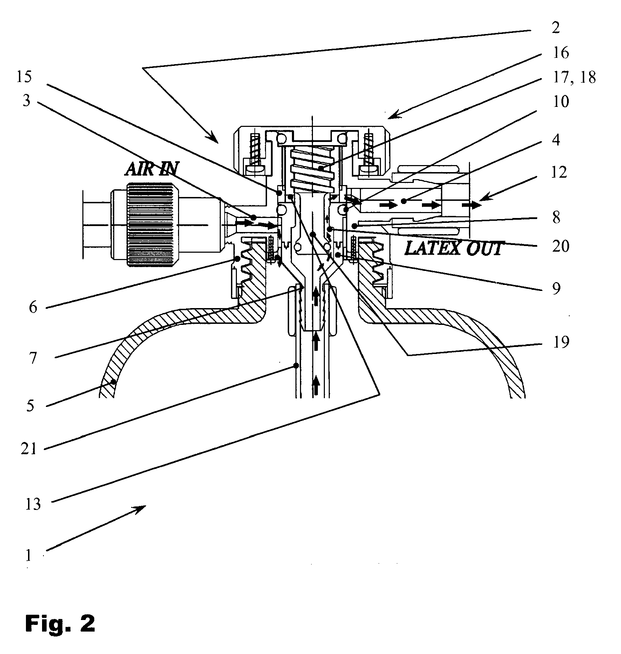

Die Fig. 1 und 2 sind zum besseren Verständnis in der Zusammenschau zu betrachten.

Die Fig. 1 und 2 zeigen eine prinzipielle Darstellung einer erfindungsgemäßen Vorrichtung 1 zum Abdichten und Aufpumpen von Kraftfahrzeugreifen, wobei die Vorrichtung eine hier nicht näher dargestellte Druckgasquelle aufweist, die an die Ventil- und Verteilereinheit 2 über eine Einlassleitung 3 angeschlossen ist. Die Ventil- und Verteilereinheit 2 weist eine an den ebenfalls hier nicht näher dargestellten aufblasbaren Gegenstand anschließbaren Auslaßleitung 4 auf.

Der flaschenförmige Dichtmittelbehälter 5 ist über ein Schraubgewinde 6 mit der Ventil- und Verteilereinheit 2 lösbar verschraubt und weist einen in den Dichtmittelbehälter (5) hineinragenden Kragen 7 auf, wobei der Kragen 7 teilweise das Ventilgehäuse 8 bildet.

Die Ventil- und Verteilereinheit 2 weist einen in einem Ventilgehäuse 8 in seiner Längsachse verschiebbaren Ventilkolben 9 auf, der zwischen zwei Schaltpositionen verfahrbar ist. Die Fig. 1 zeigt dabei die erste Schaltposition, in der eine Verbindung zwischen der mit der Einlassleitung 3 verbundene Druckgasquelle und der Auslaßleitung 4 entsteht. Die Fig. 2 zeigt die zweite Schaltposition, bei der eine Verbindung zwischen der mit der Einlassleitung 3 verbundene Druckgasquelle und der mit dem aufblasbaren Gegenstand verbunden Auslaßleitung 4 über den Dichtmittelbehälter 5 entsteht. Beide Figuren zeigen dabei die entsprechenden Strömungspfeile und -passagen.

Der Ventilkolben 9 schließt in der ersten Schaltposition (Fig. 1) den Behälter 5 mit Hilfe des O-Rings 10 dichtend ab und stellt somit einen durch die Strömungspfeile 11 skizzierten ersten Durchlass zwischen der mit der Einlassleitung 3 verbundenen Druckgasquelle und der Auslaßleitung 4 her. In der zweiten Schaltposition (Fig. 2) schließt der Ventilkolben 9 den ersten Durchlass zwischen der Einlassleitung und der Auslaßleitung dichtend ab und stellt einen durch die Strömungspfeile 12 skizzierten anderen/zweiten Durchlass zwischen der mit der Einlassleitung 3 verbundenen Druckgasquelle und dem Dichtmittelbehälter 5 sowie zwischen Dichtmittelbehälter 5 und der mit dem aufblasbaren Gegenstand verbunden Auslaßleitung 4 her.

Der erste und der zweite Durchlass werden dabei einerseits durch einen im Ventilkolben 9 angeordneten Bypass 13 erzeugt, andererseits durch einen zwischen dem Ventilkolben 9 und dem Ventilgehäuse 8 angeordneten Ringspalt 14 oder 15 erzeugt.

Der Ventilkolben 9 ist hohl ausgebildet und durch eine Drehbewegung des am Ventilgehäuse 8 angeordneten Drehknopfes 16 in seiner Längsachse verschiebbar, wobei der Drehknopfes 16 um die Längsachse des Ventilkolbens drehbar ist und letzteren über eine mit dem Drehknopf 16 verbundene Gewindespindel 17 im Ventilgehäuse 8 verschiebt. Der hohl ausgebildete der Ventilkolben 9 ist hierzu auf seiner Innenseite mit einem komplementär zur Gewindespindel ausgebildeten Gewinde 18 versehen.

Die Gewindespindel 17 weist einen zylindrischen Fortsatz 19 aufweist, der mindestens über eine Teillänge mit dem hohlen Ventilkolben 9 einen Ringspalt 20 bildet, wobei der zylindrische Fortsatz 19 mindestens an seinem Behälterseitigen Ende auf der Innenseite des hohlen Ventilkolbens durch dessen Verschiebung dichtend anlegbar ist.

Der Dichtmittelbehälter 5 ist in Flaschenform ausgebildet ist und, wie oben bereits gesagt, mit der Ventil- und Verteilereinheit 2 am Flaschenhals verschraubt.

Im Betriebszustand steht der Dichtmittelbehälter 5 auf seiner Grundfläche - hier nicht näher dargestellt - und die dann oberhalb der Grundfläche angeordnete Ventil- und Verteilereinheit 2 weist ein in den Dichtmittelbehälter 5 hineinragendes und bis unter den hier ebenfalls nicht näher dargestellten Dichtmittelspiegel reichendes Steigrohr 21 auf, welches an das Ventilgehäuse 8 angeschlossen ist.

### Bezugszeichenliste

### (Teil der Beschreibung)

- 1: Vorrichtung zum Abdichten und Aufpumpen
- 2: Ventil- und Verteilereinheit Druckgasquelle
- 3: Einlassleitung
- 4: Auslassleitung
- 5: Dichtmittelbehälter
- 6: Schraubgewinde
- 7: Kragen
- 8: Ventilgehäuse
- 9: Ventilkolben
- 10: O-Ring
- 11: Strömungspfeile
- 12: Strömungspfeile
- 13: Bypass
- 14: Ringspalt
- 15: Ringspalt
- 16: Drehknopf
- 17: Gewindespindel
- 18: Gewinde
- 19: Zylindrischer Fortsatz
- 20: Ringspalt
- 21: Steigrohr

## Patentansprüche

1. Vorrichtung zum Abdichten und Aufpumpen aufblasbarer Gegenstände, wobei die Vorrichtung (1) eine Druckgasquelle, einen Behälter (5) für ein in den aufblasbaren Gegenstand einfüllbares selbsttätiges Dichtmittel, eine Ventil- und Verteilereinheit (2) für Dichtmittel und Druckgas umfasst und die Ventil- und Verteilereinheit (2) mit einer an die Druckgasquelle anschließbaren Einlassleitung (3) und einer an den aufblasbaren Gegenstand anschließbaren Auslassleitung (4) versehen ist, wobei die Ventil- und Verteilereinheit (2) einen in einem Ventilgehäuse (8) in seiner Längsachse verschiebbaren Ventilkolben (9) aufweist, der zwischen zwei Schaltpositionen so verfahrbar ist, das in der ersten Schaltposition eine Verbindung zwischen der mit der Einlassleitung (3) verbundene Druckgasquelle und der Auslaßleitung (4) entsteht und dass in der zweiten Schaltposition eine Verbindung zwischen der mit der Einlassleitung (3) verbundene Druckgasquelle und der mit dem aufblasbaren Gegenstand verbunden Auslaßleitung (4) über den Dichtmittelbehälter (5) entsteht**dadurch gekennzeichnet, dass** der Ventilkolben (9) in der ersten Schaltposition den Dichtmittelbehälter (5) dichtend abschließt und einen ersten Durchlass zwischen der mit der Einlassleitung (3) verbundene Druckgasquelle und der Auslaßleitung (4) herstellt und in der zweiten Schaltposition den ersten Durchlass zwischen der Einlassleitung und der Auslaßleitung dichtend abschließt und einen zweiten Durchlass zwischen der mit der Einlassleitung (3) verbundene Druckgasquelle und dem Dichtmittelbehälter sowie zwischen Dichtmittelbehälter (5) und der mit dem aufblasbaren Gegenstand verbunden Auslaßleitung (4) herstellt.

2. Vorrichtung nach Anspruch 1, **dadurch gekennzeichnet, dass** der erste und/oder der zweite Durchlass mindestens teilweise durch einen im Ventilkolben (9) angeordneten Bypass (13) erzeugt werden.

3. Vorrichtung nach Anspruch 1 oder 2, **dadurch gekennzeichnet, dass** der erste Durchlass mindestens teilweise durch einen zwischen dem Ventilkolben (9) und dem Ventilgehäuse (8) angeordneten Ringspalt (14) erzeugt wird.

4. Vorrichtung nach Anspruch 1 bis 3, **dadurch gekennzeichnet, dass** der zweite Durchlass mindestens teilweise durch einen zwischen dem Ventilkolben (9) und dem Ventilgehäuse (8) angeordneten Ringspalt (15) erzeugt wird.

5. Vorrichtung nach Anspruch 1 bis 4, **dadurch gekennzeichnet, dass** der Ventilkolben (9) durch eine Drehbewegung eines am Ventilgehäuse (8) angeordneten Drehknopfes (16) in seiner Längsachse verschiebbar ist.

6. Vorrichtung nach Anspruch 5, **dadurch gekennzeichnet, dass** der Drehknopfes (16) um die Längsachse des Ventilkolbens drehbar ist und letzterer über eine mit dem Drehknopf (16) verbundene Gewindespindel (17) im Ventilgehäuse (8) verschiebbar ist.

7. Vorrichtung nach Anspruch 6, **dadurch gekennzeichnet, dass** die Gewindespindel (17) innerhalb des hohl ausgebildeten der Ventilkolbens (9) angeordnet und der Ventilkolben auf seiner Innenseite mit einem komplementär zur Gewindespindel (17) ausgebildeten Gewinde (18) versehen ist.

8. Vorrichtung nach Anspruch 6 oder 7, **dadurch gekennzeichnet, dass** die Gewindespindel einen zylindrischen Fortsatz (19) aufweist, der mindestens über eine Teillänge mit dem hohlen Ventilkolben (9) einen Ringspalt (20) bildet.

9. Vorrichtung nach Anspruch 7 bis 8, **dadurch gekennzeichnet, dass** der zylindrische Fortsatz (19) mindestens an seinem Behälterseitigen Ende auf der Innenseite des hohlen Ventilkolbens (9) durch dessen Verschiebung dichtend anlegbar ist.

10. Vorrichtung nach Anspruch 1 bis 9, **dadurch gekennzeichnet, dass** der Dichtmittelbehälter (5) mit der Ventil- und Verteilereinheit (2) lösbar verbunden ist

11. Vorrichtung nach Anspruch 10, **dadurch gekennzeichnet, dass** die Ventil- und Verteilereinheit (2) mit dem Dichtmittelbehälter (5) verschraubt ist, wobei der Dichtmittelbehälter (5) in Flaschenform ausgebildet ist und die Ventil- und Verteilereinheit (2) am Flaschenhals mit dem Dichtmittelbehälter (5) verschraubt ist.

12. Vorrichtung nach Anspruch 10 oder 11, **dadurch gekennzeichnet, dass** die Ventil- und Verteilereinheit (2) einen in den Dichtmittelbehälter (5) hineinragenden Kragen (7) aufweist, wobei der Kragen (7) teilweise das Ventilgehäuse bildet.

13. Vorrichtung nach Anspruch 1 bis 12, **dadurch gekennzeichnet, dass** der Ventilkolben (9) innerhalb des konzentrisch angeordneten Ventilgehäuses (8) mittels O-Ringen (10) abgedichtet ist.

14. Vorrichtung nach Anspruch 1 bis 13, **dadurch gekennzeichnet, dass** der Dichtmittelbehälter (5) im Betriebszustand auf seiner Grundfläche steht und die oberhalb der Grundfläche angeordnete Ventil- und Verteilereinheit (2) ein in den Dichtmittelbehälter (5) hineinragendes und bis unter den Dichtmittelspiegel reichendes Steigrohr (21) aufweist.

## Claims

1. Device for sealing and pumping up inflatable objects, wherein the device (1) comprises a pressurized-gas source, a vessel (5) for a self-acting sealing agent with which the inflatable object can be filled, and a valve and distributor unit (2) for sealing agent and pressurized gas, and the valve and distributor unit (2) is provided with an inlet line (3), which can be connected to the pressurized-gas source, and with an outlet line (4), which can be connected to the inflatable object, wherein the valve and distributor unit (2) has a valve piston (9) which is displaceable along its longitudinal axis in a valve housing (8) and which is movable between two switching positions such that, in the first switching position, a connection is produced between the pressurized-gas source, which is connected to the inlet line (3), and the outlet line (4), and such that, in the second switching position, a connection is produced between the pressurized-gas source, which is connected to the inlet line (3), and the outlet line (4), which is connected to the inflatable object, via the sealing agent vessel (5), **characterized in that** the valve piston (9), in the first switching position, sealingly closes off the sealing agent vessel (5) and produces a first passage between the pressurized-gas source, which is connected to the inlet line (3), and the outlet line (4), and in the second switching position, sealingly closes off the first passage between the inlet line and the outlet line and produces a second passage between the pressurized-gas source, which is connected to the inlet line (3), and the sealing agent vessel and between the sealing agent vessel (5) and the outlet line (4), which is connected to the inflatable object.

2. Device according to Claim 1, **characterized in that** the first and/or the second passage are/is produced at least partially by a bypass (13) arranged in the valve piston (9).

3. Device according to Claim 1 or 2, **characterized in that** the first passage is produced at least partially by an annular gap (14) arranged between the valve piston (9) and the valve housing (8).

4. Device according to Claims 1 to 3, **characterized in that** the second passage is produced at least partially by an annular gap (15) arranged between the valve piston (9) and the valve housing (8).

5. Device according to Claims 1 to 4, **characterized in that** the valve piston (9) can be displaced along its longitudinal axis by means of a rotational movement of a rotary knob (16) arranged on the valve housing (8).

6. Device according to Claim 5, **characterized in that** the rotary knob (16) can be rotated about the longitudinal axis of the valve piston, and said valve piston can be displaced in the valve housing (8) by means of a threaded spindle (17) which is connected to the rotary knob (16).

7. Device according to Claim 6, **characterized in that** the threaded spindle (17) is arranged within the valve piston (9) which is of hollow form, and the valve piston is provided, on its inner side, with a thread (18) which is of complementary form with respect to the threaded spindle (17).

8. Device according to Claim 6 or 7, **characterized in that** the threaded spindle has a cylindrical projection (19) which, at least over a part of its length, forms an annular gap (20) with the hollow valve piston (9).

9. Device according to Claim 7 to 8, **characterized in that** the cylindrical projection (19), at least at its vessel-side end, can be placed in sealing contact with the inner side of the hollow valve piston (9) as a result of the displacement of the latter.

10. Device according to Claims 1 to 9, **characterized in that** the sealing agent vessel (5) is releasably connected to the valve and distributor unit (2).

11. Device according to Claim 10, **characterized in that** the valve and distributor unit (2) is screwed to the sealing agent vessel (5), wherein the sealing agent vessel (5) is in the form of a bottle, and the valve and distributor unit (2) is screwed to the sealing agent vessel (5) at the bottle neck.

12. Device according to Claim 10 or 11, **characterized in that** the valve and distributor unit (2) has a collar (7) which projects into the sealing agent vessel (5), wherein the collar (7) partially forms the valve housing.

13. Device according to Claims 1 to 12, **characterized in that** the valve piston (9) is sealed off within the concentrically arranged valve housing (8) by means of 0-rings (10).

14. Device according to Claims 1 to 13, **characterized in that** the sealing agent vessel (5), in the operational state, stands on its base surface, and the valve and distributor unit (2), arranged above the base surface, has a riser pipe (21) which projects into the sealing agent vessel (5) and which extends as far as below the surface of the sealing agent.

## Revendications

1. Dispositif pour assurer l'étanchéité et le gonflage d'objets gonflables, le dispositif (1) comprenant une source de gaz sous pression, un récipient (5) pour un agent d'étanchéité automatique pouvant être introduit dans l'objet gonflable, une unité de soupape et de distributeur (2) pour l'agent d'étanchéité et le gaz sous pression, et l'unité de soupape et de distributeur (2) étant munie d'une conduite d'entrée (3) pouvant être raccordée à la source de gaz sous pression et d'une conduite de sortie (4) pouvant être raccordée à l'objet gonflable, l'unité de soupape et de distributeur (2) présentant un piston de soupape (9) pouvant être déplacé dans un boîtier de soupape (8) suivant son axe longitudinal, lequel piston peut être déplacé entre deux positions de commutation de telle sorte que dans la première position de commutation, il s'établisse une connexion entre la source de gaz sous pression connectée à la conduite d'entrée (3) et la conduite de sortie (4), et que dans la deuxième position de commutation, il s'établisse une connexion entre la source de gaz sous pression connectée à la conduite d'entrée (3) et la conduite de sortie (4) connectée à l'objet gonflable par le biais du récipient d'agent d'étanchéité (5), **caractérisé en ce que** le piston de soupape (9) ferme hermétiquement le récipient d'agent d'étanchéité (5) dans la première position de commutation, et établit un premier passage entre la source de gaz sous pression connectée à la conduite d'entrée (3) et la conduite de sortie (4), et dans la deuxième position de commutation, ferme hermétiquement le premier passage entre la conduite d'entrée et la conduite de sortie et établit un deuxième passage entre la source de gaz sous pression connectée à la conduite d'entrée (3) et le récipient d'agent d'étanchéité ainsi qu'entre le récipient d'agent d'étanchéité (5) et la conduite de sortie (4) connectée à l'objet gonflable.

2. Dispositif selon la revendication 1, **caractérisé en ce que** le premier et/ou le deuxième passage sont produits au moins en partie par une dérivation (13) disposée dans le piston de soupape (9).

3. Dispositif selon la revendication 1 ou 2, **caractérisé en ce que** le premier passage est produit au moins en partie par une fente annulaire (14) disposée entre le piston de soupape (9) et le boîtier de soupape (8).

4. Dispositif selon les revendications 1 à 3, **caractérisé en ce que** le deuxième passage est produit au moins en partie par une fente annulaire (15) disposée entre le piston de soupape (9) et le boîtier de soupape (8).

5. Dispositif selon les revendications 1 à 4, **caractérisé en ce que** le piston de soupape (9) peut être déplacé suivant son axe longitudinal par un mouvement de rotation d'un bouton tournant (16) disposé sur le boîtier de soupape (8).

6. Dispositif selon la revendication 5, **caractérisé en ce que** le bouton tournant (16) peut tourner autour de l'axe longitudinal du piston de soupape et ce dernier peut être déplacé par le biais d'une broche filetée (17) connectée au bouton tournant (16) dans le boîtier de soupape (8).

7. Dispositif selon la revendication 6, **caractérisé en ce que** la broche filetée (17) est disposée à l'intérieur du piston de soupape (9) réalisé sous forme creuse, et le piston de soupape est pourvu, sur son côté intérieur, d'un filetage (18) réalisé sous forme complémentaire à la broche filetée (17).

8. Dispositif selon la revendication 6 ou 7, **caractérisé en ce que** la broche filetée présente une saillie cylindrique (19) qui forme une fente annulaire (20) au moins sur une longueur partielle avec le piston de soupape creux (9).

9. Dispositif selon les revendications 7 à 8, **caractérisé en ce que** la saillie cylindrique (19) peut être appliquée hermétiquement par son déplacement au moins sur son extrémité du côté du récipient contre le côté intérieur du piston de soupape creux (9).

10. Dispositif selon les revendications 1 à 9, **caractérisé en ce que** le récipient d'agent d'étanchéité (5) est connecté de manière amovible à l'unité de soupape et de distributeur (2).

11. Dispositif selon la revendication 10, **caractérisé en ce que** l'unité de soupape et de distributeur (2) est vissée avec le récipient d'agent d'étanchéité (5), le récipient d'agent d'étanchéité (5) étant réalisé sous forme de bouteille et l'unité de soupape et de distributeur (2) étant vissée sur le col de la bouteille avec le récipient d'agent d'étanchéité (5).

12. Dispositif selon la revendication 10 ou 11, **caractérisé en ce que** l'unité de soupape et de distributeur (2) présente un rebord (7) pénétrant dans le récipient d'agent d'étanchéité (5), le rebord (7) formant en partie le boîtier de soupape.

13. Dispositif selon les revendications 1 à 12, **caractérisé en ce que** le piston de soupape (9) est étanchéifié au moyen de joints toriques (10) à l'intérieur du boîtier de soupape (8) disposé concentriquement.

14. Dispositif selon les revendications 1 à 13, **caractérisé en ce que** le récipient d'agent d'étanchéité (5), dans l'état de fonctionnement, repose sur sa surface de base et l'unité de soupape et de distributeur (2) disposée au-dessus de la surface de base présente un tube montant (21) pénétrant dans le récipient d'agent d'étanchéité (5) et s'étendant jusqu'en dessous du niveau d'agent d'étanchéité.
